# EUROPEAN PATENT APPLICATION

(11) **EP 4 459 366 A1**
(43) Date of publication of application: **06.11.2024**
(21) Application number: 22928404.7
(22) Date of filing: 15.12.2022
(51) Int. Cl.: G02F 1/035

(54) **ELECTRO-OPTIC MODULATOR**

(30) Priority: 25.02.2022 CN 202210177565
(71) Applicant: Suzhou Lycore Technologies Co., Ltd., Suzhou, Jiangsu 215123 (CN)
(72) Inventor: LIANG, Hanxiao, Suzhou, Jiangsu 215123 (CN); SONG, Yipin, Suzhou, Jiangsu 215123 (CN); ZHOU, Yingcong, Suzhou, Jiangsu 215123 (CN); WU, Haicang, Suzhou, Jiangsu 215123 (CN); MAO, Wenhao, Suzhou, Jiangsu 215123 (CN); SONG, Shiwei, Suzhou, Jiangsu 215123 (CN); SUN, Weiqi, Suzhou, Jiangsu 215123 (CN); YU, Qingyang, Suzhou, Jiangsu 215123 (CN); ZHANG, Zhouyu, Suzhou, Jiangsu 215123 (CN)
(74) Representative: Reddie & Grose LLP
(86) International application number: PCT/CN2022/139311
(87) International publication number: WO 2023/160150

(57) **Abstract**

Provided is an electro-optic modulator, comprising: a first light-splitting element, comprising a first input port configured to input an operating signal, a first output port configured to output a main path signal, and a second output port configured to output a first monitoring signal; a second light-splitting element, which has a one-in two-out structure and an input port thereof being connected to the first output port; two waveguide arms, with one end of each of the waveguide arms being correspondingly connected to two output ports of the second light-splitting element; a bias voltage modulation module, which is configured to apply a bias voltage to the two waveguide arms on the basis of a bias voltage signal; a radio frequency modulation module, which is configured to apply a radio frequency voltage to the two waveguide arms on the basis of a radio frequency signal; a third light-splitting element, which has a two-in three-out structure and two input ports thereof being correspondingly connected to the other end of each of the two waveguide arms; and a fourth light-splitting element, which has a one-in two-out structure and an input port thereof being connected to a first output port of the third light-splitting element, the fourth light-splitting element comprising a third output port configured to output a maximum optical power value and a fourth output port configured to output a second monitoring signal.

## Description

### CROSS-REFERENCE TO RELATED APPLICATION

The present application claims priority of the invention patent application No. 202210177565.1, filed on February 25, 2022, and entitled "ELECTRO-OPTIC MODULATOR", and the disclosure of the priority claimed by the present application is incorporated herein by reference in its entirety.

### TECHNICAL FIELD

The present disclosure relates to the technical field of optical communications, and in particular, to an electro-optic modulator.

### BACKGROUND

In recent years, with rapid development of emerging network application services such as Internet of Things, unmanned driving, telemedicine, and distance education, higher requirements have been put forward for high-speed and large-capacity communication technology. Optical communications have achieved rapid development in the direction of high-speed and large-capacity communications due to their characteristics such as a large bandwidth, high reliability, a low cost and a strong anti-interference ability. How to load high-speed electrical signals onto optical carriers is a core research content.

An electro-optic modulator is a type of modulator that is made on the basis of an electro-optic effect of electro-optic materials. The electro-optic effect means that when a voltage is applied to an electro-optic material such as a lithium niobate crystal, a gallium arsenide crystal, or a lithium tantalate crystal, a refractive index of the electro-optic material will vary, thereby causing the characteristics of light waves passing through the electro-optic material to change. The use of the electro-optic effect allows modulation of parameters, such as the phase, amplitude, strength and polarization state, of optical signals.

With increasingly urgent requirements for the high-speed and large-capacity communication technology, higher requirements have been put forward for the operating performance of the electro-optic modulator.

### SUMMARY

The present disclosure provides an electro-optic modulator, comprising: a first light-splitting element, comprising a first input port configured to input an operating signal, a first output port configured to output a main path signal, and a second output port configured to output a first monitoring signal; a second light-splitting element, which has a one-in two-out structure and an input port thereof being connected to the first output port; two waveguide arms, with one end of each of the waveguide arms being correspondingly connected to two output ports of the second light-splitting element; a bias voltage modulation module, which is configured to apply a bias voltage to the two waveguide arms on the basis of a bias voltage signal; a radio frequency modulation module, which is configured to apply a radio frequency voltage to the two waveguide arms on the basis of a radio frequency signal; a third light-splitting element, which has a two-in three-out structure and two input ports thereof being correspondingly connected to the other end of each of the two waveguide arms; and a fourth light-splitting element, which has a one-in two-out structure and an input port thereof being connected to a first output port of the third light-splitting element, the fourth light-splitting element comprising a third output port configured to output a maximum optical power value and a fourth output port configured to output a second monitoring signal.

In some embodiments, when the electro-optic modulator is in an operating state, the optical power input from the first input port is represented by P1, the optical power output from the first output port is represented by P2 = P1 * (100-A)%, and the optical power output from the second output port is represented by P3 = P1 * A%, where A% is less than 50%.

In some embodiments, the electro-optic modulator further comprises: a fifth light-splitting element, which has a one-in two-out structure and an input port thereof being connected to a second output port of the third light-splitting element, the fifth light-splitting element comprising a fifth output port configured to output a third monitoring signal and a sixth output port configured to output a fourth monitoring signal.

In some embodiments, A% is a constant value, or A% is determined on the basis of a power ratio of the third monitoring signal to the fourth monitoring signal.

In some embodiments, the electro-optic modulator further comprises: a sixth light-splitting element, which has a one-in two-out structure and an input port thereof being connected to a third output port of the third light-splitting element, the sixth light-splitting element comprising a seventh output port configured to output a fifth monitoring signal and an eighth output port configured to output a sixth monitoring signal.

In some embodiments, the electro-optic modulator further comprises: a feedback module, which is configured to adjust the bias voltage signal output to the bias voltage modulation module on the basis of at least one of the first monitoring signal, the second monitoring signal, the third monitoring signal, the fourth monitoring signal, the fifth monitoring signal, and the sixth monitoring signal.

In some embodiments, the first light-splitting element further comprises a second input port configured to input a detection signal.

In some embodiments, when the electro-optic modulator is in a detection state, the optical power input from the second input port is represented by P0, the optical power output from the first output port is represented by P4 = P0 * A%, the optical power output from the second output port is represented by P5 = P0 * (100-A)%, the maximum optical power value output from the third output port is represented by P6, the maximum optical power value output from the fourth output port is represented by P7 = P6 * A%, and the transmission loss of the electro-optic modulator is represented by C = P6/P4.

In some embodiments, the first input port of the first light-splitting element and the second input port of the first light-splitting element have exchange symmetry, and the first output port and the second output port have exchange symmetry.

In some embodiments, the third output port of the fourth light-splitting element and the fourth output port of the fourth light-splitting element have exchange symmetry; and/or the fifth output port of the fifth light-splitting element and the sixth output port of the fifth light-splitting element have exchange symmetry.

In some embodiments, the seventh output port of the sixth light-splitting element and the eighth output port of the sixth light-splitting element have exchange symmetry.

In some embodiments, the first output port of the third light-splitting element is configured to output the maximum optical power values of coherently enhanced signals of two branch optical signals having a phase difference of 2NΠ, where N is 0 or a natural number; and the second output port and the third output port of the third light-splitting element are configured to correspondingly output set allocation proportions of the maximum optical power values of coherently enhanced signals of two branch optical signals having a phase difference of (2N + 1)Π, where the set allocation proportions are greater than 0 and less than 1.

In some embodiments, the third light-splitting element has an axisymmetric structure, and the second output port and the third output port thereof are arranged symmetrically relative to the first output port.

In some embodiments, the electro-optic modulator is configured in an NRZ encoding format or a PAM4 encoding format.

It should be understood that the content described in this section is not intended to identify critical or important features of the embodiments of the present disclosure, and is not used to limit the scope of the present disclosure. Other features of the present disclosure will be readily understood with reference to the following description.

### BRIEF DESCRIPTION OF THE DRAWINGS

More details, features, and advantages of the present disclosure are disclosed in the following description of exemplary embodiments with reference to the accompanying drawings, in which:
FIG. 1 is a top view of a simplified structure of a conventional electro-optic modulator;
FIG. 2 is a schematic view of a simplified structure of an electro-optic modulator according to some embodiments of the present disclosure;
FIG. 3 is a curve graph illustrating the correlation between the optical power output from a first output port and a second output port of a third light-splitting element and a phase difference between two branch optical signals arriving at the third light-splitting element according to some embodiments of the present disclosure; and
FIG. 4 is a schematic view of a simplified structure of an electro-optic modulator according to some other embodiments of the present disclosure.

### DETAILED DESCRIPTION OF EMBODIMENTS

Only some exemplary embodiments are briefly described below. As can be appreciated by those skilled in the art, the described embodiments can be modified in various ways without departing from the spirit or scope of the present disclosure. Accordingly, the accompanying drawings and the description are considered as illustrative in nature, and not as restrictive.

A Mach-Zehnder modulator is one type of electro-optic modulator, in which an input optical signal is split into two branch optical signals, which then enter two waveguide arms, respectively. The two waveguide arms are each made of an electro-optic material and have a refractive index changing with an applied modulation voltage. The change in the refractive index of the waveguide arms may lead to a change in phases of the branch optical signals. Therefore, an output from the convergence of the two branch optical signals is an interference signal with a strength changing with the modulation voltage. In brief, the Mach-Zehnder modulator can implement modulation of different sidebands by controlling the modulation voltage applied to the two waveguide arms. As a device for converting electrical signals into optical signals, the Mach-Zehnder modulator is one of the common core devices in optical interconnection, optical computing and optical communication systems.

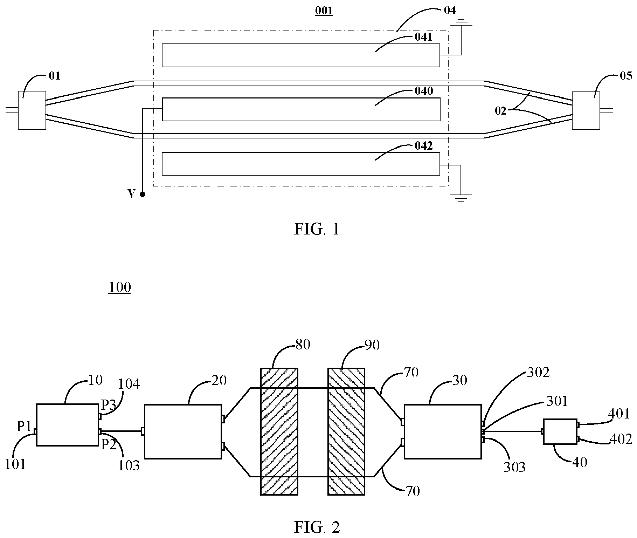

FIG. 1 shows a schematic structural view of a conventional Mach-Zehnder modulator. Ideally, the Mach-Zehnder modulator 001 has two waveguide arms 02 that are identical to each other. When the Mach-Zehnder modulator 001 is not operating, neither of the two waveguide arms 02 undergoes an electro-optic effect. Input light passes through a light-splitting element 01 and is then equally split into two branch optical signals. The two branch optical signals are still in the same phase after respectively passing through one waveguide arm 02, and thus coherently enhanced signals of the two branch optical signals are output from a light-combining element 05. When the Mach-Zehnder modulator 001 is operating, a modulation electrode 04 (for example, comprising a signal electrode 040, a first ground electrode 041 and a second ground electrode 042) applies a modulation voltage to the two waveguide arms 02, and the two branch optical signals may differ in phase by an odd or even multiple of II after each of the two branch optical signals passes through one waveguide arm 02. When the two branch optical signals differ in phase by an even multiple of II, the light-combining element 05 outputs coherently enhanced signals of the two branch optical signals. When the two branch optical signals differ in phase by an odd multiple of Π, the light-combining element 05 outputs coherent cancellation signals of the two branch optical signals.

However, in practice, the two waveguide arms 02 cannot be identical absolutely due to reasons such as a material and electric charge accumulation; when the Mach-Zehnder modulator 001 is not operating, a certain phase deviation has appeared after the two branch optical signals respectively pass through one waveguide arm 02, this phase deviation is inevitable, is an inherent phase difference and may vary with changes in time and environmental conditions, and the existence of this phase deviation affects the accuracy of output signals when the Mach-Zehnder modulator 001 is operating, or even causes the Mach-Zehnder modulator 001 to be incapable of performing normal output.

Therefore, it is required to perform bias voltage modulation on the two waveguide arms by means of a bias voltage modulation module to compensate the phase deviation caused by the inherent difference between the two waveguide arms, so as to improve the accuracy of operating signals output from the electro-optic modulator and thus improve the operating performance of the electro-optic modulator.

The embodiments of the present disclosure provide an electro-optic modulator, in order to improve the accuracy of operating signals output from the electro-optic modulator.

As shown in FIG. 2, the electro-optic modulator 100 provided according to some embodiments of the present disclosure comprises a first light-splitting element 10, a second light-splitting element 20, two waveguide arms 70, a bias voltage modulation module 80, a radio frequency modulation module 90, a third light-splitting element 30 and a fourth light-splitting element 40.

The first light-splitting element 10 comprises a first input port 101 configured to input an operating signal, a first output port 103 configured to output a main path signal, and a second output port 104 configured to output a first monitoring signal. The second light-splitting element 20 has a one-in two-out structure and an input port thereof being connected to the first output port 103, and is configured to equally split an optical signal input from the input port into two branch optical signals. The two waveguide arms 70 correspondingly provide transmission paths for the two branch optical signals, and one end of each of the waveguide arms is correspondingly connected to two output ports of the second light-splitting element 20. The third light-splitting element 30 has a two-in three-out structure and two input ports thereof being correspondingly connected to the other end of each of the two waveguide arms 70, and is configured to correspondingly receive the branch optical signals transmitted by means of the two waveguide arms 70. The fourth light-splitting element 40 has a one-in two-out structure and an input port thereof being connected to a first output port 301 of the third light-splitting element 30, and the fourth light-splitting element 40 comprises a third output port 401 configured to output a maximum optical power value and a fourth output port 402 configured to output a second monitoring signal.

The radio frequency modulation module 90 is configured to apply a radio frequency voltage to the two waveguide arms 70 on the basis of a radio frequency signal to perform radio frequency modulation on the two branch optical signals transmitted therein, such that a phase difference is generated between the two branch optical signals. The bias voltage modulation module 80 is configured to apply a bias voltage to the two waveguide arms 70 on the basis of the bias voltage signal, to perform bias voltage modulation on the two branch optical signals transmitted therein.

In the present disclosure, each light-splitting element refers to an optical power allocation element, for example, a multiple-mode interference element having an optical power allocation function. A designer can design actual structures of the light-splitting elements according to the designed allocation proportions of optical power. When the electro-optic modulator 100 is in an operating state, the optical power input from the first input port 101 is represented by P1, the optical power output from the first output port 103 is represented by P2 = P1 * (100-A)%, and the optical power output from the second output port 104 is represented by P3 = P1 * A%.

In the embodiments of the present disclosure, on the basis of the first monitoring signal output from the second output port 104 of the first light-splitting element 10, it can be monitored whether the operating signal input from the first input port 101 is normal, for example, whether the power for coupling the operating signal into the electro-optic modulator 100 can reach a target power. On the basis of the second monitoring signal output from the fourth output port 402 of the fourth light-splitting element 40 and the signal output from the second output port 302 or the third output port 303 of the third light-splitting element 30, it can be monitored whether the operating state of the electro-optic modulator 100 is normal, for example, whether the two branch optical signals reach a target phase difference.

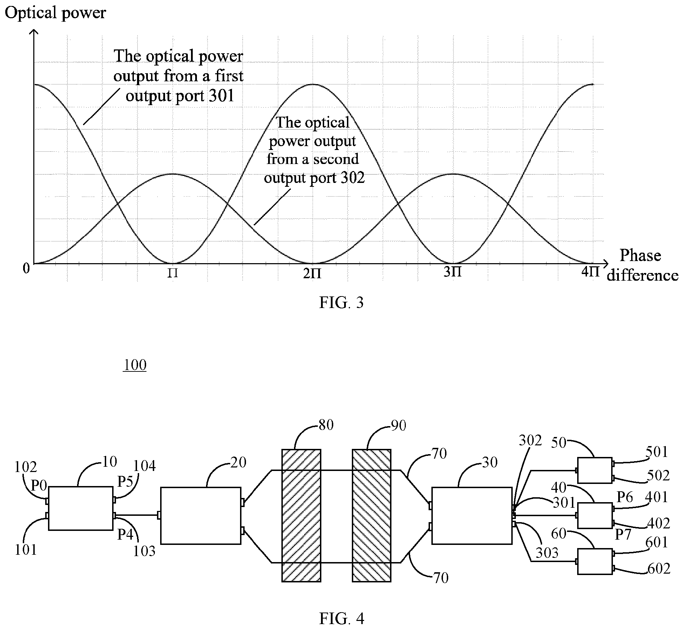

Referring to FIG. 3, FIG. 3 is a curve graph illustrating the correlation between the optical power output from the first output port 301 and the second output port 302 (which may also be the third output port 303) of the third light-splitting element 30 and the phase difference between the two branch optical signals.

When the optical power ratio K of the second monitoring signal (which is a set proportion of the optical power output from the first output port 301) output from the fourth output port 402 to the signal output from the second output port 302 or the third output port 303 of the third light-splitting element 30 reaches a maximum value, it can be obtained that the phase difference between the two branch optical signals is zero or an even multiple of II, and when the ratio K reaches a minimum value, it can be obtained that the phase difference between the two branch optical signals is an odd multiple of II.

Therefore, by means of the design of the embodiments of the present disclosure, the operating signals and operating states input into the electro-optic modulator 100 can be monitored effectively; on the basis of these monitoring information, the bias voltage signal output to the bias voltage modulation module 80 is adjusted, and the phase deviation caused by the inherent difference between the two waveguide arms 70 can be compensated, so that the accuracy of the operating signals output from the electro-optic modulator 100 in the operating state can be improved.

On the basis of an encoding format and a target output of the electro-optic modulator 100, at least one target phase difference required to be achieved by the two branch optical signals may be predetermined. The encoding format of the electro-optic modulator 100 includes, but is not limited to, an NRZ encoding format and a PAM4 encoding format. The encoding formats of the electro-optic modulator 100 are different, and the specific settings of the target phase difference are also different.

In some embodiments, the electro-optic modulator 100 uses the NRZ (Non-return-to-zero Code) encoding format, so that the two branch optical signals can produce a first target phase difference ϕ1 and a second target phase difference ϕ2, and the first target phase difference ϕ1 and the second target phase difference ϕ2 satisfy: |ϕ1 - (2NΠ + Π/2)| = |ϕ2 - (2NΠ + Π/2)|. For example, the first target phase difference ϕ1 is represented by 2NΠ, the second target phase difference ϕ2 is represented by (2N + 1)Π, or the first target phase difference ϕ1 is represented by 2NII + 3Π/10, the second target phase difference ϕ2 is represented by 2NII + 7Π/10, or the first target phase difference ϕ1 is represented by 2NΠ + Π/10, the second target phase difference ϕ2 is represented by 2NII + 9Π/10, and so on, which are not enumerated herein. A control chip of the electro-optic modulator 100 outputs a radio frequency modulation signal to the radio frequency modulation module 90 on the basis of the first target phase difference ϕ1 and the second target phase difference ϕ2.

In some other embodiments, the electro-optic modulator 100 uses the PAM4 (4-Level Pulse Amplitude Modulation) encoding format, so that the two branch optical signals may produce the first target phase difference ϕ1, the second target phase difference ϕ2, the third target phase difference ϕ3, and the fourth target phase difference ϕ4. The first target phase difference ϕ1, the second target phase difference ϕ2, the third target phase difference ϕ3, and the fourth target phase difference ϕ4 satisfy: |ϕ1 - Π/2| = 3|ϕ2 - Π/2| = 3|ϕ3 - Π/2| = |ϕ4 - Π/2|. The control chip of the electro-optic modulator 100 outputs the radio frequency modulation signal to the radio frequency modulation module 90 on the basis of the first target phase difference ϕ1, the second target phase difference ϕ2, the third target phase difference ϕ3 and the fourth target phase difference ϕ4.

In some embodiments of the present disclosure, the first output port 301 of the third light-splitting element 30 is configured to output the maximum optical power values of coherently enhanced signals (corresponding to the maximum energy values or maximum strength values of the coherently enhanced signals) of the two branch optical signals having the phase difference of 2NΠ, where N is 0 or a natural number; and the second output port 302 and the third output port 303 of the third light-splitting element 30 are configured to correspondingly output the set allocation proportions of the maximum optical power values of the coherently enhanced signals (corresponding to the maximum energy values or maximum strength values of the coherently enhanced signals) of the two branch optical signals having the phase difference of (2N + 1)Π, wherein the set allocation proportions are greater than 0 and less than 1.

The specific values of the above-mentioned set allocation proportions are not limited. For example, the signals correspondingly output from the second output port 302 and the third output port 303 of the third light-splitting element 30 can both reach 50% of the maximum optical power values of the coherently enhanced signals of the two branch optical signals with a phase difference of (2N + 1)Π. For another example, the signal output from the second output port 302 of the third light-splitting element 30 can reach 40% of the maximum optical power values of the coherently enhanced signals of the two branch optical signals with a phase difference of (2N + 1)Π, and the signal output from the third output port 303 of the third light-splitting element 30 can reach 60% of the maximum optical power values of the coherently enhanced signals of the two branch optical signals with a phase difference of (2N + 1)Π. After the set allocation proportions are determined, a specific structural dimension of the third light-splitting element 30 can be designed on the basis of the set allocation proportions.

When the phase difference between the two branch optical signals is (2N + 1)Π, the two branch optical signals still produce coherent enhancement by utilizing the multiple-mode interference effect of the third light-splitting element 30, and the coherently enhanced signals are either equally divided or proportionally allocated between the second output port 302 and the third output port 303 of the third light-splitting element 30, output as monitoring signals and are capable of reaching the maximum optical power values thereof. Therefore, according to the technical solutions of the embodiments of the present disclosure, relatively strong monitoring signals can be obtained without substantially weakening the strength of the operating signals output from the electro-optic modulator 100, so that the effectiveness of monitoring is ensured.

In some embodiments, the third light-splitting element 30 has an axisymmetric structure, and the second output port 302 and the third output port 303 thereof are arranged symmetrically relative to the first output port 301. Such a design can allow the overall structure to be symmetrical and thus weaken the dependence of the element on the wavelength, so that the electro-optic modulator 100 is applicable to a wider signal waveband and has a larger application range.

As shown in FIG. 4, in some embodiments of the present disclosure, the electro-optic modulator 100 further comprises: a fifth light-splitting element 50, which has a one-in two-out structure and an input port thereof being connected to the second output port 302 of the third light-splitting element 30, the fifth light-splitting element comprising a fifth output port 501 configured to output a third monitoring signal and a sixth output port 502 configured to output a fourth monitoring signal; and a sixth light-splitting element 60, which has a one-in two-out structure and an input port thereof being connected to the third output port 303 of the third light-splitting element 30, the sixth light-splitting element comprising a seventh output port 601 configured to output a fifth monitoring signal and an eighth output port 602 configured to output a sixth monitoring signal. The structures of the fifth light-splitting element 50 and the sixth light-splitting element 60 may be identical completely. In addition, only one of the fifth light-splitting element 50 and the sixth light-splitting element 60 may also be arranged.

In some embodiments of the present disclosure, the first input port 101 of the first light-splitting element 10 and the second input port 102 of the first light-splitting element 10 have exchange symmetry, and the first output port 103 and the second output port 104 have exchange symmetry; and/or, the third output port 401 of the fourth light-splitting element 40 and the fourth output port 402 of the fourth light-splitting element 40 have exchange symmetry; and/or, the fifth output port 501 of the fifth light-splitting element 50 and the sixth output port 502 of the fifth light-splitting element 50 have exchange symmetry; and/or, the seventh output port 601 of the sixth light-splitting element 60 and the eighth output port 602 of the sixth light-splitting element 60 have exchange symmetry.

In the present disclosure, A% may be a constant value determined according to experience, or may be a constant value determined on the basis of the power ratio of the third monitoring signal to the fourth monitoring signal. In some embodiments of the present disclosure, A% mentioned above is less than 50%, for example, A% is valued as 3% or 5%. By branching out a small part of the optical power and coupling the optical power to the second output port 104, the operating signal input from the first input port 101 can be monitored, so that the effectiveness of monitoring can be ensured, and the modulation efficiency of the electro-optic modulator 100 can also be ensured.

As shown in FIG. 4, in some embodiments of the present disclosure, the first light-splitting element 10 further comprises a second input port 102 configured to input a detection signal. The second input port 102 can be used as a debugging and detection input port of the electro-optic modulator 100 at a product development or testing stage. When the electro-optic modulator 100 is in a detection state, the optical power input from the second input port 102 is represented by P0, the optical power output from the first output port 103 is represented by P4 = P0 * A%, the optical power output from the second output port 104 is represented by P5 = P0 * (100-A)%, the maximum optical power value output from the third output port 401 is represented by P6, the maximum optical power value output from the fourth output port 402 is represented by P7 = P6 * A%, and the transmission loss of the electro-optic modulator 100 is represented by C = P6/P4. A% is less than 50%, for example, A% is valued as 3% or 5%, which can allow most of the optical power to be output from the second output port 104, and is thus conductive to improving the detection accuracy.

On the basis of monitoring values of at least some parameters such as P0, P4, P5, P6, P7, etc., the transmission loss of the electro-optic modulator 100 using a certain design can be calculated. If the transmission loss is controlled within a target range, a product meets the ex-factory design requirements; and if the transmission loss is larger and not within the target range, the specific structural details of the product can be revised in design to reduce the transmission loss.

In some embodiments of the present disclosure, the electro-optic modulator 100 further comprises a feedback module, which is configured to adjust the bias voltage signal output to the bias voltage modulation module 80 on the basis of at least one of the first monitoring signal, the second monitoring signal, the third monitoring signal, the fourth monitoring signal, the fifth monitoring signal, and the sixth monitoring signal. The feedback module may comprise a signal strength monitoring sensor located at a corresponding monitoring output port, and on the premise that an output operating signal of the electro-optic modulator 100 meets accuracy requirements, the signal strength monitoring sensor may detect a monitoring signal output from the output port in real time or at a certain frequency.

In the embodiments, the electro-optic modulator 100 itself has a function of monitoring the operating signals and the operating state, and can automatically and dynamically adjust the bias voltage signal output to the bias voltage modulation module 80 on the basis of these monitoring information, so as to compensate the phase deviation caused by the inherent difference between the two waveguide arms 70, so that the accuracy and reliability of the operating signals output from the electro-optic modulator 100 can be improved. In some embodiments, when the strength of some monitoring signals does not reach a target strength value (for example, a first monitoring signal disappears or is extremely weak), the feedback module can also trigger an alarm unit of the electro-optic modulator 100 to give an alarm prompt.

It should be understood that, in this description, the orientations or positional relationships or dimensions denoted by the terms, such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial" and "circumferential", are the orientations or positional relationships or dimensions shown on the basis of the accompanying drawings, and these terms are used merely for ease of description, rather than indicating or implying that the device or element referred to must have particular orientations and be constructed and operated in the particular orientations, and therefore should not be construed as limiting the scope of protection of the present disclosure.

In addition, the terms such as "first", "second" and "third" are merely for descriptive purposes and should not be construed as indicating or implying relative importance or implicitly indicating the number of technical features indicated. Thus, the features defined with "first", "second" and "third" may explicitly or implicitly include one or more features. In the description of the present disclosure, the term "a plurality of" means two or more, unless otherwise explicitly and specifically defined.

In the present disclosure, unless expressly stated or defined otherwise, the terms such as "mounting", "connection", "connected" and "fixing" should be interpreted broadly, for example, they may be a fixed connection, a detachable connection, or an integrated connection; may be a mechanical connection, or an electrical connection, or communication; and may be a direct connection or an indirect connection by means of an intermediate medium, or may be internal communication between two elements or interaction between the two elements. For those of ordinary skill in the art, the specific meanings of the above terms in the present disclosure can be understood according to specific circumstances.

In the present disclosure, unless expressly stated or defined otherwise, the expression of the first feature being "above" or "below" the second feature may include the case that the first feature is in direct contact with the second feature, or the case that the first feature and the second feature are not in direct contact but are contacted via another feature therebetween. Furthermore, the first feature being "over", "above" or "on" the second feature includes the case that the first feature is directly or obliquely above the second feature, or merely indicates that the first feature is at a higher level than the second feature. The first feature being "below", "under" or "beneath" the second feature includes the case that the first feature is directly or obliquely below the second feature, or merely indicates that the first feature is at a lower level than the second feature.

This description provides many different implementations or examples that can be used to implement the present disclosure. It should be understood that these different implementations or examples are purely illustrative and are not intended to limit the scope of protection of the present disclosure in any way. On the basis of the disclosure of the description of the present disclosure, those skilled in the art will be able to conceive of various changes or substitutions. All these changes or substitutions shall fall within the scope of protection of the present disclosure. Therefore, the scope of protection of the present disclosure shall be subject to the scope of protection of the claims.

## Claims

1. An electro-optic modulator, comprising:
a first light-splitting element, comprising a first input port configured to input an operating signal, a first output port configured to output a main path signal, and a second output port configured to output a first monitoring signal;
a second light-splitting element, which has a one-in two-out structure and an input port thereof being connected to the first output port;
two waveguide arms, with one end of each of the waveguide arms being correspondingly connected to two output ports of the second light-splitting element;
a bias voltage modulation module, which is configured to apply a bias voltage to the two waveguide arms on the basis of a bias voltage signal;
a radio frequency modulation module, which is configured to apply a radio frequency voltage to the two waveguide arms on the basis of a radio frequency signal;
a third light-splitting element, which has a two-in three-out structure and two input ports thereof being correspondingly connected to the other end of each of the two waveguide arms; and
a fourth light-splitting element, which has a one-in two-out structure and an input port thereof being connected to a first output port of the third light-splitting element, the fourth light-splitting element comprising a third output port configured to output a maximum optical power value and a fourth output port configured to output a second monitoring signal.

2. The electro-optic modulator according to claim 1, wherein
when the electro-optic modulator is in an operating state, the optical power input from the first input port is represented by P1, the optical power output from the first output port is represented by P2 = P1 * (100-A)%, and the optical power output from the second output port is represented by P3 = P1 * A%, where A% is less than 50%.

3. The electro-optic modulator according to claim 2, further comprising:
a fifth light-splitting element, which has a one-in two-out structure and an input port thereof being connected to a second output port of the third light-splitting element, the fifth light-splitting element comprising a fifth output port configured to output a third monitoring signal and a sixth output port configured to output a fourth monitoring signal.

4. The electro-optic modulator according to claim 3, wherein
A% is a constant value, or A% is determined on the basis of a power ratio of the third monitoring signal to the fourth monitoring signal.

5. The electro-optic modulator according to claim 3, further comprising:
a sixth light-splitting element, which has a one-in two-out structure and an input port thereof being connected to a third output port of the third light-splitting element, the sixth light-splitting element comprising a seventh output port configured to output a fifth monitoring signal and an eighth output port configured to output a sixth monitoring signal.

6. The electro-optic modulator according to claim 5, further comprising:
a feedback module, which is configured to adjust the bias voltage signal output to the bias voltage modulation module on the basis of at least one of the first monitoring signal, the second monitoring signal, the third monitoring signal, the fourth monitoring signal, the fifth monitoring signal, and the sixth monitoring signal.

7. The electro-optic modulator according to claim 5, wherein
the first light-splitting element further comprises a second input port configured to input a detection signal.

8. The electro-optic modulator according to claim 7, wherein
when the electro-optic modulator is in a detection state, the optical power input from the second input port is represented by P0, the optical power output from the first output port is represented by P4 = P0 * A%, the optical power output from the second output port is represented by P5 = P0 * (100-A)%, the maximum optical power value output from the third output port is represented by P6, the maximum optical power value output from the fourth output port is represented by P7 = P6 * A%, and the transmission loss of the electro-optic modulator is represented by C = P6/P4.

9. The electro-optic modulator according to claim 8, wherein
the first input port of the first light-splitting element and the second input port of the first light-splitting element have exchange symmetry, and the first output port of the first light-splitting element and the second output port of the first light-splitting element have exchange symmetry.

10. The electro-optic modulator according to claim 8, wherein
the third output port of the fourth light-splitting element and the fourth output port of the fourth light-splitting element have exchange symmetry.

11. The electro-optic modulator according to claim 8, wherein
the fifth output port of the fifth light-splitting element and the sixth output port of the fifth light-splitting element have exchange symmetry.

12. The electro-optic modulator according to claim 8, wherein
the seventh output of the sixth light-splitting element port and the eighth output port of the sixth light-splitting element have exchange symmetry.

13. The electro-optic modulator according to any one of claims 1 to 12, wherein
the first output port of the third light-splitting element is configured to output the maximum optical power values of coherently enhanced signals of two branch optical signals with a phase difference of 2NΠ, where N is 0 or a natural number; and
the second output port and the third output port of the third light-splitting element are configured to correspondingly output set allocation proportions of the maximum optical power values of coherently enhanced signals of two branch optical signals with a phase difference of (2N + 1)Π, where the set allocation proportions are greater than 0 and less than 1.

14. The electro-optic modulator according to any one of claims 1 to 12, wherein
the third light-splitting element has an axisymmetric structure, and the second output port and the third output port thereof are arranged symmetrically relative to the first output port.

15. The electro-optic modulator according to any one of claims 1 to 12, wherein
the electro-optic modulator is configured in an NRZ encoding format or a PAM4 encoding format.
